# EUROPÄISCHE PATENTSCHRIFT

(11) **EP 2 718 125 B1**
(45) Veröffentlichungstag und Bekanntmachung des Hinweises auf die Patenterteilung: **26.12.2018**
(21) Anmeldenummer: 12730413.7
(22) Anmeldetag: 08.06.2012
(51) Int. Cl.: B60C 23/04

(54) **VERFAHREN ZUM BETREIBEN EINER REIFENDRUCKÜBERWACHUNGSEINHEIT UND REIFENDRUCKÜBERWACHUNGSEINHEIT**
METHOD FOR OPERATING A TYRE PRESSURE-MONITORING UNIT, AND TYRE PRESSURE-MONITORING UNIT
PROCÉDÉ DE FONCTIONNEMENT D'UN MODULE DE SURVEILLANCE DE PRESSION DE PNEUS ET MODULE DE SURVEILLANCE DE PRESSION DE PNEUS

(30) Priorität: 09.06.2011 DE 102011050985
(43) Veröffentlichungstag der Anmeldung: 16.04.2014
(73) Patentinhaber: Huf Hülsbeck & Fürst GmbH & Co. KG, 42551 Velbert (DE)
(72) Erfinder: WAGNER, Markus, 71638 Ludwigsburg (DE); KRAFT, Michael, 75053 Gondelsheim (DE)
(74) Vertreter: Twelmeier Mommer & Partner
(86) Internationale Anmeldenummer: PCT/EP2012/060855
(87) Internationale Veröffentlichungsnummer: WO 2012/168403

(56) Entgegenhaltungen:
- WO-A1-2011/004229

## Beschreibung

Die Erfindung geht aus von einem Verfahren zum Betreiben einer Reifendrucküberwachungseinheit mit den im Oberbegriff des Anspruchs 1 angegebenen Merkmalen, wie es aus der WO 2011/004229 A1 bekannt ist.

Moderne Reifendrucküberwachungseinheiten haben mehrere Betriebsmodi, die sich in der Mess- und Sendetätigkeit unterscheiden. Typischerweise haben Reifendrucküberwachungseinheiten wenigstens einen Fahrtmodus, einen Parkmodus und einen Warnmodus. In dem Fahrtmodus werden Druckmessungen in ersten Zeitabständen vorgenommen und in zweiten Zeitabständen, die größer als die ersten Zeitabstände sind, Druckinformationen drahtlos gesendet. In dem Parkmodus werden die Zeitabstände zwischen Druckmessungen verlängert und die Sendehäufigkeit reduziert, um den Energieverbrauch zu minimieren. Wenn eine kritische Druckänderung festgestellt wird, geht die Reifendrucküberwachungseinheit in einen Warnmodus über, in dem Druckmessungen in verkürzten Zeitabständen vorgenommen werden und die Sendetätigkeit erhöht ist. Der Warnmodus sorgt so dafür, dass einer Zentraleinheit eines Reifendrucküberwachungssystems im Fall eines gefährlichen Druckabfalls Druckdaten mit minimaler Zeitverzögerung zur Verfügung gestellt werden, damit ein Fahrer oder ein elektronisches Fahrdynamikregelungssystem so schnell wie möglich auf einen gefährlichen Druckabfall regieren kann.

Die Reifendrucküberwachungseinheiten handelsüblicher Systeme haben häufig mehrere Fahrtmodi, die sich in der Sendetätigkeit und häufig auch in der Messtätigkeit unterscheiden. Beispielsweise kann ein erster Fahrtmodus durch einen Fahrtbeginn ausgelöst werden und nach einer vorgegebenen Zeitspanne von beispielsweise 10 bis 20 Minuten von einem zweiten Fahrtmodus abgelöst werden. Der zweite Fahrtmodus dient dann zur Reifendrucküberwachung im regulären Fahrtbetrieb, während der erste Fahrtmodus einer Zentraleinheit des Systems ein rasches Zuordnen von charakteristischen Kennungen der einzelnen Reifendrucküberwachungseinheiten zu den verschiedenen Radpositionen ermöglichen soll. In dem ersten Fahrtmodus werden Datentelegramme deshalb in kürzeren Zeitabständen gesendet als in dem zweiten Fahrtmodus. Die Abstände zwischen Sendungen sind dabei auch in dem ersten Fahrtmodus aber in der Regel deutlich größer als in dem Warnmodus.

Aufgabe der vorliegenden Erfindung ist es, einen Weg aufzuzeigen, wie die Reifendrucküberwachung weiter verbessert werden kann und dem Fahrer eines Fahrzeugs relevante Druckdaten dann zur Verfügung gestellt werden können, wenn diese benötigt werden, ohne den Energiebedarf einer Reifendrucküberwachungseinheit wesentlich zu erhöhen.

Diese Aufgabe wird durch ein Verfahren mit den im Anspruch 1 angegebenen Merkmalen sowie durch eine Reifendrucküberwachungseinheit gemäß Anspruch 4 gelöst. Vorteilhafte Weiterbildungen der Erfindung sind Gegenstand von Unteransprüchen.

Bei einem erfindungsgemäßen Verfahren wird mit einem Drucksensor der Reifendrucküberwachungseinheit in regelmäßigen Zeitabständen eine Druckmessung vorgenommen und in größeren Zeitabständen von einem Sender der Reifendrucküberwachungseinheit eine Druckinformation als Datentelegramm zusammen mit einer die sendende Reifendrucküberwachung identifizierenden Kennung gesendet. Von einer Steuereinheit der Reifendrucküberwachungseinheit wird die Druckmessung daraufhin überprüft, ob eine Druckänderung, die einen Schwellenwert übersteigt, aufgetreten ist. Falls eine solche Druckänderung aufgetreten ist, werden Druckmessungen in verkürzten Zeitabständen vorgenommen und die Sendetätigkeit erhöht, d.h. die Reifendrucküberwachungseinheit geht in einen Warnmodus über. Eine Besonderheit des erfindungsgemäßen Verfahrens ist, dass die Steuereinheit einen ersten Schwellenwert für die Druckänderung bei stehendem Fahrzeug und einen zweiten Schwellenwert, der von dem ersten Schwellwert abweicht, für die Druckänderung bei fahrendem Fahrzeug verwendet.

Bei einem erfindungsgemäßen Verfahren kann die Reifendrucküberwachungseinrichtung also sowohl von einem Fahrzustand als auch von einem Parkzustand aus in einen Warnmodus übergehen, wobei in beiden Fällen unterschiedliche Schwellenwerte für den dafür erforderlichen Druckabfall verwendet werden. Auf diese Weise kann die Reifendrucküberwachung vorteilhaft dazu benutzt werden, um einen Benutzer beim optimalen Befüllen der Reifen zu unterstützen. Die bei einem Befüllen auftretenden Druckänderungen haben in der Regel eine vergleichbare Größe wie die beim Fahrbetrieb Druckschwankungen, die beispielsweise durch Erwärmung hervorgerufen werden. Indem nun für ein parkendes Fahrzeug ein anderer Schwellenwert als für ein fahrendes Fahrzeug verwendet wird, kann der Schwellenwert für ein parkendes Fahrzeug so niedrig gesetzt werden, dass die beim Aufpumpen eines Reifens auftretenden Druckänderungen diesen Schwellenwert zuverlässig übersteigen. Wegen der dann verkürzten Zeitabstände zwischen Druckmessungen kann einem Benutzer des Fahrzeugs während des Aufpumpens vorteilhaft der Reifendruck signalisiert werden. Bevorzugt wird das Erreichen eines optimalen Fülldrucks durch ein akustisches Signal angezeigt, das beispielsweise von einer Zentraleinheit, die einen Empfänger zum Empfangen von drahtlose übermittelten Druckinformationen der Reifendrucküberwachungseinheiten aufweist, ausgelöst werden kann. Das Aufpumpen des Reifens auf einen optimalen Druck wird durch ein solches Reifendrucküberwachungssystem erleichtert.

Zur Überprüfung, ob eine Druckänderung einen Schwellenwert übersteigt, kann im einfachsten Fall die Differenz zwischen einem aktuellen Messwert und einem Referenzwert, der auf einem oder mehreren vorhergehenden Messwerten beruht, gebildet und der Betrag dieser Differenz mit einem Schwellenwert verglichen werden. Auf diese Weise kann für Druckanstiege und Druckabfälle derselbe Schwellenwert verwendet werden. An sich ist es aber auch möglich, für einen Druckanstieg und einen Druckabfall unterschiedliche Schwellenwerte zu verwenden. Insbesondere können bei einer erfindungsgemäßen Reifendrucküberwachungseinrichtung zwei unterschiedliche Parkwarnmodi vorgesehen sein, wobei ein erster Parkwarnmodus durch einen Druckanstieg, der einen Schwellenwert übersteigt, und der zweite Parkwarnmodus durch einen Druckabfall, der einen Schwellenwert, der bevorzugt einen anderem Wert hat, übersteigt, oder durch Absinken des Reifendrucks unter eine vorgegebene Schwelle, ausgelöst wird. Die beiden Parkwarnmodi können sich beispielsweise in den Zeitabständen zwischen Druckmessungen und/oder dem Senden von Druckinformationen unterscheiden.

Als Referenzwert kann im einfachsten Fall jeweils der dem aktuellen Messwert vorhergehende Messwert verwendet werden. Der Referenzwert kann aber auch aus mehreren, beispielsweise zwei oder drei, früheren Messwerten berechnet werden, beispielsweise durch Mittelwertbildung.

Die Steuereinheit ermittelt bei einem erfindungsgemäßen Verfahren durch Auswerten von Signalen eines Beschleunigungssensors der Reifendrucküberwachungseinheit, ob der erste Schwellenwert oder der zweite Schwellenwert verwendet wird, d.h. die Steuereinheit entscheidet anhand von Signalen des Beschleunigungssensors, ob das Fahrzeug parkt oder fährt.

Der Schwellenwert für eine Druckänderung kann als Quotient zwischen einer Druckdifferenz und einem Zeitintervall definiert werden. Bevorzugt ist der Schwellenwert aber als maximal zulässige Differenz zwischen einem aktuellen Druckmesswert und einem Referenzwert, der aus einer oder mehreren vorhergehenden Druckmessungen bestimmt wurde und bevorzugt mit dem Ergebnis einer vorhergehenden Druckmessung übereinstimmt, vorgegeben.

Erfindungsgemäß ist vorgesehen, dass die verkürzten Zeitabstände zwischen Druckmessungen größer sind, wenn ein Überschreiten des ersten Schwellenwerts die Verkürzung ausgelöst hat, als wenn ein Überschreiten des zweiten Schwellenwertes die Verkürzung ausgelöst hat. Dies bedeutet, dass bei einem parkenden Fahrzeug ein Überschreiten des Schwellenwertes dazu führt, dass die Zeitabstände zwischen Druckmessungen größer sind als wenn bei einem fahrenden Fahrzeug der zweite Schwellenwert überschritten wird. Mit anderen Worten unterscheidet sich also ein Parkwarnmodus, in den die Reifendrucküberwachungseinheit aus einem Parkmodus gelangt ist, von einem Fahrtwarnmodus, in den die Reifendrucküberwachungseinheit aus einem Fahrtmodus gelangt ist, in der Messtätigkeit, nämlich der Häufigkeit von Druckmessungen.

Insbesondere wenn der erste Schwellenwert kleiner als der zweite Schwellenwert ist, deutet ein Überschreiten des zweiten Schwellenwertes bei fahrendem Fahrzeug auf einen gefährlichen Druckabfall hin, der die Fahrzeugsicherheit erheblich beeinträchtigen kann. In einer solchen Situation ist es von Vorteil, wenn Druckmessungen in kurzen Zeitabständen von beispielsweise einer Sekunde oder weniger durchgeführt und in ebenso kurzen Zeitabständen Druckinformationen gesendet werden. Bei einem parkenden Fahrzeug geht von einem Überschreiten des ersten Schwellenwertes dagegen keine unmittelbare Gefahr aus. Wenn einem Fahrer bei einem späteren Fahrtbeginn sofort ein während des Parkens aufgetretener Druckverlust angezeigt oder das Aufpumpen eines Reifens überwacht werden soll, können die Zeitabstände zwischen Druckmessungen problemlos größer sein als in einem Fahrtwarnmodus. Bevorzugt betragen die verkürzten Zeitabstände zwischen Druckmessungen bei parkendem Fahrzeug wenigstens das Doppelte der verkürzten Zeitabstände bei fahrendem Fahrzeug.

Das Messen des Reifendrucks in verkürzten Zeitabständen entspricht einem Übergang der Reifendrucküberwachungseinheit in einen Warnmodus. Bei einer erfindungsgemäßen Reifendrucküberwachungseinheit sind gewissermaßen wenigstens zwei Warnmodi vorhanden, nämlich ein Parkwarnmodus oder mehrere Parkwarnmodi und ein Fahrtwarnmodus. An sich können die Abstände zwischen Druckmessungen und dem Senden von Druckinformationen in dem Parkwarnmodus und dem Fahrtwarnmodus übereinstimmen. Bevorzugt unterscheiden sich die Zeitabstände zwischen Druckmessungen im Parkwarnmodus aber von den Zeitabständen zwischen Druckmessungen im Fahrtwarnmodus.

Eine weitere vorteilhafte Weiterbildung der Erfindung sieht vor, dass in dem Parkwarnmodus oder wenigstens einem der Parkwarnmodi die Zeitabstände zwischen Druckmessungen und die Zeitabstände zwischen dem Senden von Druckinformationen übereinstimmen. Entsprechend ist bevorzugt, dass in dem Fahrtwarnmodus die Zeitabstände zwischen Druckmessungen und die Zeitabstände zwischen dem Senden von Druckinformationen übereinstimmen. In den Parkwarnmodus bzw. in dem Fahrtwarnmodus wird dann jede gemessene Druckinformation auch gesendet. Im Gegensatz dazu werden in dem Parkmodus und dem Fahrtmodus nicht alle Druckmessungen auch gesendet. Wenn nämlich festgestellt wird, dass sich der Reifendruck nicht oder nur unwesentlich geändert hat, besteht keine Notwendigkeit, diese Information auch zu senden. In diesem Fall ist es zur Überwachung des Reifendrucks ausreichend, wenn erst nach einer vorgegebenen Anzahl von Druckmessungen auch eine Druckinformation gesendet wird.

Die Steuereinheit einer erfindungsgemäßen Reifendrucküberwachungseinheit geht aus dem Parkmodus in den Fahrtmodus über, wenn aus einem Signal des Beschleunigungssensors, darauf geschlossen werden kann, dass sich der Reifen, an dem die Reifendrucküberwachungseinheit montiert ist, dreht. Umgekehrt geht die Reifendrucküberwachungseinheit aus dem Fahrtmodus in den Parkmodus über, wenn durch Auswertung von Signalen des Beschleunigungssensors keine Raddrehung mehr festgestellt werden kann.

Eine weitere vorteilhafte Weiterbildung der Erfindung sieht vor, dass die Steuereinheit aus dem Parkmodus auch dann in den Parkwarnmodus oder einen der Parkwarnmodi übergeht, wenn der Reifendruck unter einen dritten Schwellenwert gefallen ist. Bei stehendem Fahrzeug wird also auch überprüft, ob der Reifendruck unter einen dritten Schwellenwert gefallen ist, und falls dies der Fall ist, werden Druckmessungen in verkürzten Zeitabständen vorgenommen und die Sendetätigkeit erhöht. Der dritte Schwellenwert kann so gewählt werden, dass ein Reifendruck unterhalb dieses Schwellenwertes keine sichere Fahrt mehr ermöglicht. Wenn eine einzelne Messung ein solches Resultat ergibt, ist es vorteilhaft, wenn dies unmittelbar durch eine Serie von Druckmessungen überprüft wird, damit einem Fahrer bei einem späteren Fahrtantritt sofort die Information zur Verfügung gestellt werden kann, dass einer der Reifen platt ist.

Bevorzugt verlässt die Steuereinheit den Parkwarnmodus nach einer vorgegebenen Anzahl von Druckmessungen. Falls ein erster Parkwarnmodus durch einen Druckabfall und ein zweiter Parkwarnmodus durch einen Druckanstieg ausgelöst wird, unterscheiden sich vorzugsweise die vorgegeben Maximalzahlen der Druckmessungen, nach denen der betreffende Parkwarnmodus wieder verlassen wird. Die Zeitdauer des Parkwarnmodus, der durch einen Druckanstieg ausgelöst wird, kann auf diese Weise an die üblicherweise zum Aufpumpen eines Fahrzeugreifens erforderlich Zeit angepasst werden.

Bevorzugt hat eine erfindungsgemäße Reifendrucküberwachungseinheit einen Speicher, in dem vermerkt wird, ob seit dem Ende der letzten Fahrt schon einmal ein Übergang in den Parkwarnmodus erfolgt ist. Dieser Speicher wird bevorzugt jedes Mal zurückgesetzt, wenn die Steuereinheit durch Auswerten von Signalen eines Beschleunigungssensors einen Fahrtbeginn erkennt, also jedes Mal wenn die Reifendrucküberwachungseinheit aus dem Parkmodus in den Fahrtmodus übergeht. Auf diese Weise kann erreicht werden, dass ein Fahrzeug zwischen zwei Fahrten höchstens ein Mal in den Parkwarnmodus übergeht.

Besonders bevorzugt wird in dem Speicher, der beispielsweise in die Steuereinheit integriert sein kann, vermerkt, ob seit der letzten Fahrt schon einmal wegen eines Abfallen des Reifendrucks unter den dritten Schwellenwert ein Übergang in den Parkwarnmodus erfolgt ist. In einem solchen Fall würde nämlich auch nach einer Rückkehr aus dem Parkwarnmodus weiterhin festgestellt, dass der Reifen platt ist. Damit diese Information nicht ständig neu gesendet wird, unterbleibt bevorzugt ein erneuter Übergang in den Parkwarnmodus, wenn in dem Speicher ein Wert gespeichert ist, der angibt, dass seit der letzten Fahrt schon einmal ein Übergang in den Parkwarnmodus erfolgt ist, weil der Reifendruck unter den dritten Schwellenwert gefallen ist.

Bevorzugt verlässt die Steuereinheit den Fahrtwarnmodus frühestens nach einer vorgegebenen Anzahl von Druckmessungen. Auf diese Weise kann ein unnötig hoher Energieverbrauch nach Auftreten einer kritischen Druckänderung oder dem Unterschreiten eines kritischen Schwellenwertes vermieden werden. Besonders bevorzugt ist dabei, dass die für das Verlassen des Fahrtwarnmodus vorgegebene Anzahl von Druckmessungen größer als die für das Verlassen des Parkwarnmodus vorgegebene Anzahl von Druckmessungen ist, beispielsweise mindestens das Dreifache beträgt. Auf diese Weise lässt sich die Überwachung bei parkendem Fahrzeug energieeffizient gestalten und bei fahrendem Fahrzeug eine große Sicherheit erreichen.

Die für das Verlassen eines Warnmodus vorgegebene Anzahl von Druckmessungen kann als eine Zeitspanne vorgegeben werden, beispielsweise mit einem RC-Glied, die die Druckmessungen in regelmäßigen Abständen durchgeführt werden. Möglich ist es auch, eine Zahl in einem Speicher vorzugeben und den Zählerstand nach jeder Druckmessung anzupassen. In dem Fahrtwarnmodus kann dabei die vorgegebene Anzahl von Druckmessungen bei jeder Druckmessung, die an sich einen Übergang in den Fahrwarnmodus auslösen würde, wieder auf den ursprünglichen Wert zurückgesetzt werden, um ein zu frühes Verlassen des Fahrtwarnmodus zu verhindern. Möglich ist es aber auch, dass der Fahrtwarnmodus stets verlassen wird, wenn die vorgegebene Anzahl von Druckmessungen durchgeführt wurde.

Weitere Einzelheiten und Vorteile der Erfindung werden an einem Ausführungsbeispiel unter Bezugnahme auf die beigefügte Zeichnung erläutert.

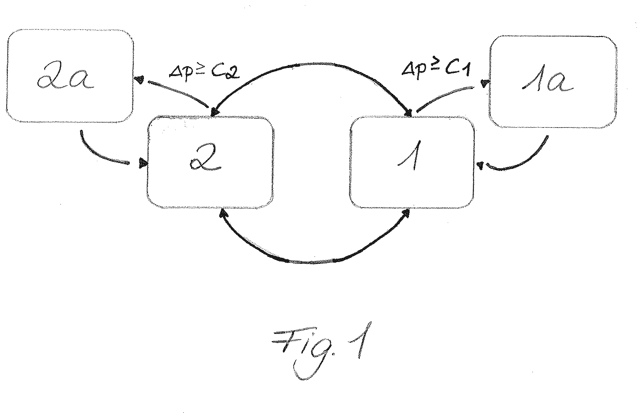

- Figur 1: zeigt schematisch verschiedene Betriebsmodi einer Reifendrucküberwachungseinheit und somit ein Verfahren zum Betreiben einer Reifendrucküberwachungseinheit.

Eine Reifendrucküberwachungseinheit hat einen Drucksensor zum Messen des Reifendrucks, einen Sender zum drahtlosen Senden von Druckinformationen, einen Beschleunigungssensor, um einen sich drehenden Reifen von einem stehenden Reifen zu unterscheiden, und eine Steuereinheit zum Steuern der Mess- und Sendetätigkeit. Die Reifendrucküberwachungseinheit kann zusätzlich weitere Sensoren, beispielsweise einen Temperatursensor oder einen weiteren Beschleunigungssensor aufweisen.

Die Reifendrucküberwachungseinheit hat einen Fahrtmodus 1 und einen Parkmodus 2. In dem Fahrtmodus 1 werden Druckmessungen in ersten Zeitabständen vorgenommen und Druckinformationen in zweiten Zeitabständen ausgesendet. In dem Parkmodus 2 werden Druckmessungen in dritten Zeitabständen, die länger als die ersten Zeitabstände sind, vorgenommen und in vierten Zeitabständen, die länger als die zweiten Zeitabstände sind, Druckinformationen ausgesendet. Möglich ist es auch, dass ein Aussenden von Druckinformationen im Parkmodus unterbleibt oder nur erfolgt, wenn eine signifikante Druckänderung eintritt oder vorgegebene Druckschwellen über- bzw. unterschritten werden.

Sowohl in dem Fahrtmodus 1 als auch in dem Parkmodus 2 wird mit dem Beschleunigungssensor jeweils auch die Beschleunigung gemessen. Die Steuereinheit wertet die Signale des Beschleunigungssensors aus und wechselt in Abhängigkeit von einem Ergebnis der Auswertung zwischen dem Fahrtmodus 1 und dem Parkmodus 2.

Im einfachsten Fall kann der Beschleunigungssensor ein Rollschalter sein. Möglich ist auch, dass ein Schwellenwert für die Bahn- und/oder Zentrifugalbeschleunigung vorgegeben ist. Wenn ein gemessener Beschleunigungswert einen vorgegebenen Schwellenwert überschreitet, kann auf ein fahrendes Fahrzeug geschlossen werden. Andernfalls geht die Reifendrucküberwachungseinheit von einem parkenden Fahrzeug aus und bleibt in dem Parkmodus 2 bzw. geht in den Parkmodus 2 über. Dabei ist es möglich, dass erst in den Fahrtmodus 1 übergegangen wird, wenn die Fahrtgeschwindigkeit einen bestimmten Schwellenwert, beispielsweise 10 km/h, überschreitet.

Bevorzugt wird in dem Fahrtmodus 1 bei jeder Druckmessung auch eine Beschleunigungsmessung vorgenommen. In dem Parkmodus 2 wird dagegen bevorzugt die Beschleunigung häufiger als der Druck gemessen. Beispielsweise können in dem Parkmodus 2 Beschleunigungswerte in Zeitabständen gemessen werden, die nur ein Zehntel oder weniger der Zeitabstände zwischen Druckmessungen betragen, damit ein Fahrtbeginn möglichst umgehend festgestellt werden kann.

Die Steuereinheit und damit die Reifendrucküberwachungseinheit geht aus dem Parkmodus 2 in einen Parkwarnmodus 2a über, wenn eine Druckänderung festgestellt wird, die einen ersten gespeicherten Schwellenwert übersteigt. In dem Parkwarnmodus 2a werden Druckmessungen in verkürzten Zeitabständen vorgenommen, nämlich in fünften Zeitabständen, die kleiner als die dritten Zeitabstände sind, in denen im Parkmodus 2 Druckmessungen vorgenommen werden. In dem Parkwarnmodus 2a ist auch die Sendetätigkeit erhöht. Dies bedeutet, dass Druckinformationen in Zeitabständen gesendet werden, die kleiner als die vierten Zeitabstände sind, in denen im Parkmodus 2 Druckinformationen gesendet werden, und bevorzugt auch kleiner als die zweiten Zeitabstände sind, in denen im Fahrtmodus 1 Druckinformationen gesendet werden.

In entsprechender Weise geht die Steuereinheit aus dem Fahrtmodus 1 in einen Fahrtwarnmodus 1a über, wenn eine Druckänderung festgestellt wird, die einen zweiten gespeicherten Schwellenwert übersteigt, der von dem ersten Schwellenwert abweicht und bevorzugt größer als der erste Schwellenwert ist. Besonders vorteilhaft ist es, wenn der zweite Schwellenwert mindestens um die Hälfte größer ist als der erste Schwellenwert. Bei dem dargestellten Ausführungsbeispiel ist der zweite Schwellenwert doppelt so groß wie der erste Schwellenwert.

In dem Parkwarnmodus 2a und in dem Fahrtwarnmodus 1a wird bevorzugt jeder Druckwert auch gesendet. Dies bedeutet, dass die Zeitabstände zwischen Druckmessungen und dem Ausführen von Druckinformationen gleich sind. Die Zeitabstände zwischen Druckmessungen im Parkwarnmodus 2a, also die fünften Zeitabstände, sind größer als die Zeitabstände zwischen Druckmessungen im Fahrtwarnmodus 1a, also die sechsten Zeitabstände. Bevorzugt sind die fünften Zeitabstände wenigstens doppelt so groß wie die sechsten Zeitabstände. Bei dem dargestellten Ausführungsbeispiel sind die fünften Zeitabstände, in denen im Parkwarnmodus 2a Druckmessungen vorgenommen werden, dreimal so groß wie die sechsten Zeitabstände, in denen im Fahrtwarnmodus 1a Druckmessungen vorgenommen werden. Die Zeitabstände zwischen Bescheunigungsmessungen können sich bei einem Übergang von dem Parkmodus 2 in den Parkwarnmodus 2a ebenfalls ändern. Bevorzugt wird die Beschleunigung in dem Parkmodus 2 aber in denselben Zeitabständen wie in dem Parkwarnmodus 2a gemessen.

Die Zeitabstände zwischen Beschleunigungsmessungen in dem Parkwarnmodus 2a sind bevorzugt größer als die fünften Zeitabstände zwischen Druckmessungen in dem Parkwarnmodus 2a, bevorzugt wenigstens doppelt so groß. Bei dem dargestellten Ausführungsbeispiel sind die Zeitabstände zwischen Beschleunigungsmessungen in dem Parkwarnmodus 2a dreimal so groß wie die fünften Zeitabstände in dem Parkwarnmodus 2a.

Die Reifendrucküberwachungseinheit geht aus dem Parkmodus 2 in den Parkwarnmodus 2a auch dann über, wenn der Reifendruck unter einen dritten Schwellenwert absinkt. Der dritte Schwellenwert kann beispielsweise 2,4 bar betragen und ist bevorzugt so gewählt, dass der Reifen aufgepumpt werden sollte, wenn der Reifendruck diesen Schwellenwert unterschreitet.

Der Fahrtwarnmodus 1a wird nach einer vorgegebenen Anzahl von Druckmessungen verlassen. Bevorzugt ist diese Anzahl so gewählt, dass der Fahrtwarnmodus 1a nach zwei bis fünf Minuten wieder verlassen wird. In entsprechender Weise wird auch der Parkwarnmodus 2a nach einer vorgegebenen Anzahl von Druckmessungen wieder verlassen. Beispielsweise können die Anzahl und die Zeitabstände zwischen Druckmessungen so gewählt sein, dass der Parkwarnmodus 2a nach einem Zeitraum von einer Minute bis fünfzehn Minuten wieder verlassen wird. Bevorzugt wird der Parkwarnmodus 2a auch dann verlassen, wenn der Beschleunigungssensor ein Signal liefert, dass auf ein fahrendes Fahrzeug hindeutet.

Die Reifendrucküberwachungseinheit weist einen Speicher auf, der in die Steuereinheit integriert sein kann, und in dem die verschiedenen Schwellenwerte gespeichert sind. Zusätzlich kann in dem Speicher auch ein Wert gespeichert sein, der angibt, ob wegen Unterschreiten des dritten Schwellenwertes schon einmal Druckmessungen in verkürzten Schwellenwerten vorgenommen wurden. Bei jedem Fahrtbeginn wird der Speicher zurückgesetzt. Auf diese Weise lässt sich erreichen, dass ein Übergang in den Parkwarnmodus 2a wegen unterschreiten des dritten Schwellenwertes nur ein einziges Mal während einer Parkdauer, d.h. zwischen einem Fahrtende und einem erneuten Fahrtbeginn, stattfinden kann.

Die beschriebene Reifendrucküberwachungseinheit bildet zusammen mit einer Zentraleinheit, die einen Empfänger zum Empfangen von drahtlos übermittelten Druckinformationen aufweist, ein System zur Reifendrucküberwachung. Die Reifendrucküberwachungseinheit wird im Luftreifen eines Fahrzeugs, beispielsweise auf der Felge, insbesondere an einem Ventil, montiert. Die Zentraleinheit erzeugt ein Warnsignal, beispielsweise ein akustisches Warnsignal, wenn der Reifendruck in dem Parkwarnmodus 2a einen vorgegebenen Schwellenwert übersteigt. Auf diese Weise kann dem Fahrer eines Fahrzeugs das Aufpumpen der Fahrzeugreifen auf einen optimalen Druck wesentlich erleichtert werden. Beim Aufpumpen ergibt sich nämlich eine Druckänderung, die einen Übergang aus dem Parkmodus in den Parkwarnmodus 2a bewirkt. In dem Parkwarnmodus 2a wird dann während dem Aufpumpen des Reifens fortlaufend in verkürzten Zeitabständen der Reifendruck gemessen und eine entsprechende Druckinformation an den Empfänger der Zentraleinheit übermittelt. Sobald ein optimaler Fülldruck erreicht ist, kann dies von der Zentraleinheit durch ein Warnsignal angezeigt werden. Das Aufpumpen des Fahrzeugreifens kann somit bei einem optimalen Fülldruck beendet werden.

Besonders vorteilhaft ist es, wenn zwei verschiedene Parkwarnmodi vorgesehen sind. Ein erster Parkwarnmodus kann dann durch einen Druckanstieg ausgelöst werden, der einen Schwellenwert übersteigt. Dieser Parkwarnmodus kann auf die Funktion einer Befüllhilfe optimiert sein, die das Aufpumpen des Fahrzeugsreifens auf einen optimalen Fülldruck erleichtert. Der zweite Parkwarnmodus kann dadurch ausgelöst werden, dass ein Druckabfall einen vorgegebenen Schwellenwert überschreitet oder der Reifendruck unter einen vorgegebenen Wert abfällt. Bevorzugt unterscheiden sich die beiden Parkwarnmodi durch den Abstand zwischen Druckmessungen und/oder durch die Anzahl von Druckmessungen, nach denen die Steuereinheit den betreffenden Parkwarnmodus beendet.

## Patentansprüche

1. Verfahren zum Betreiben einer Reifendrucküberwachungseinheit zum Überwachen von Luftreifen eines Fahrzeugs, wobei
mit einem Drucksensor der Reifendrucküberwachungseinheit in regelmäßigen Zeitabständen eine Druckmessung vorgenommen wird und in größeren Zeitabständen von einem Sender der Reifendrucküberwachungseinheit eine Druckinformation drahtlos gesendet wird,
von einer Steuereinheit der Reifendrucküberwachungseinheit überprüft wird, ob eine Druckänderung, die einen Schwellenwert übersteigt, aufgetreten ist und, falls dies der Fall ist, Druckmessungen in verkürzten Zeitabständen vorgenommen werden und die Sendetätigkeit erhöht wird,
die Steuereinheit einen ersten Schwellenwert für die Druckänderung bei stehendem Fahrzeug und einen zweiten Schwellenwert, der von dem ersten Schwellwert abweicht, für die Druckänderung bei fahrendem Fahrzeug verwendet, und
wobei die Steuereinheit durch Auswerten eines Signals eines Beschleunigungssensors der Reifendrucküberwachungseinheit ermittelt, ob der erste Schwellenwert oder der zweite Schwellenwert verwendet wird,
**dadurch gekennzeichnet, dass** die verkürzten Zeitabstände zwischen Druckmessungen größer sind, wenn ein Überschreiten des ersten Schwellenwerts die Verkürzung ausgelöst hat als wenn ein Überschreiten des zweiten Schwellenwerts die Verkürzung ausgelöst hat.

2. Verfahren nach Anspruch 1, **dadurch gekennzeichnet, dass** der erste Schwellenwert kleiner als der zweite Schwellenwert ist, vorzugsweise um wenigstens ein Drittel kleiner ist.

3. Verfahren nach einem der vorstehenden Ansprüche, **dadurch gekennzeichnet, dass** von der Steuereinheit bei stehendem Fahrzeug auch überprüft wird, ob der Reifendruck unter einen dritten Schwellenwert gefallen ist, und falls dies der Fall ist, Druckmessungen in verkürzten Zeitabständen vorgenommen werden und die Sendetätigkeit erhöht wird.

4. Reifendrucküberwachungseinheit mit
einem Beschleunigungssensor,
einem Drucksensor,
einem Sender zum drahtlosen Übermitteln von Druckinformationen, und
einer Steuereinheit zum Steuern der Mess- und Sendetätigkeit,
wobei die Reifendrucküberwachungseinheit
in einem Fahrtmodus (1) Druckmessungen in ersten Zeitabständen vornimmt und in zweiten Zeitabständen Druckinformationen aussendet,
in einem Parkmodus (2) Druckmessungen in dritten Zeitabständen, die länger als die ersten Zeitabstände sind, vornimmt, und
wobei die Steuereinheit Signale des Beschleunigungssensors auswertet und in - Abhängigkeit von einem Ergebnis der Auswertung zwischen dem Fahrtmodus (1) und dem Parkmodus (2) wechselt,
wobei die Steuereinheit in einen Warnmodus (1a; 2a) übergeht, wenn eine Druckänderung festgestellt wird, die einen gespeicherten Schwellenwert übersteigt, und dann Druckmessungen in Zeitabständen, die kürzer als die ersten Zeitabstände sind, vornimmt und Druckinformationen in Zeitabständen aussendet, die kürzer als die zweiten Zeitabstände sind, und
wobei die Steuereinheit aus dem Parkmodus (2) in einen Parkwarnmodus (2a) übergeht, wenn eine Druckänderung festgestellt wird, die einen ersten gespeicherten Schwellenwert übersteigt, und aus dem Fahrtmodus (1) in einen Fahrtwarnmodus (1a) übergeht, wenn eine Druckänderung festgestellt wird, die einen zweiten gespeicherten Schwellenwert übersteigt, der von dem ersten Schwellenwert abweicht,
wobei die Steuereinheit den Parkwarnmodus (2a) spätestens nach einer vorgegebenen Anzahl von Druckmessungen wieder verlässt,
und wobei die Steuereinheit den Fahrtwarnmodus (1a) nach einer vorgegebenen Anzahl von Druckmessungen wieder verlässt,
**dadurch gekennzeichnet, dass** die für das Verlassen des Fahrtwarnmodus vorgegebene Anzahl von Druckmessungen größer als die für das Verlassen des Parkwarnmodus vorgegebene Anzahl von Druckmessungen ist.

5. Reifendrucküberwachungseinheit nach Anspruch 4, **dadurch gekennzeichnet, dass** in dem Parkwarnmodus (2a) Druckmessungen in fünften Zeitabständen vorgenommen werden und in dem Fahrtwarnmodus (1a) Druckmessungen in sechsten Zeitabständen, die kürzer als die fünften Zeitabstände sind, vorgenommen werden.

6. Reifendrucküberwachungseinheit nach Anspruch 4 oder 5, **dadurch gekennzeichnet, dass** die Steuereinheit aus dem Parkmodus (2) auch dann in den Parkwarnmodus (2a) übergeht, wenn der Reifendruck unter einen dritten Schwellenwert gefallen ist.

7. Reifendrucküberwachungseinheit nach Anspruch 6, **dadurch gekennzeichnet, dass** in einem Speicher vermerkt wird, ob wegen Unterschreiten des dritten Schwellenwerts schon einmal ein Übergang in den Parkwarnmodus (2a) erfolgt ist und der Speicher jedes Mal zurückgesetzt wird, wenn die Steuereinheit durch Auswerten von Signalen eines Beschleunigungssensors einen Fahrtbeginn erkennt, und ein Übergang in den Parkwarnmodus (2a) nicht erfolgt, wenn in dem Speicher ein Wert gespeichert ist, der anzeigt dass wegen Unterschreiten des dritten Schwellenwerts schon einmal seit der letzten Fahrt ein Übergang in den Parkwarnmodus (2a) erfolgt ist.

8. System zur Reifendrucküberwachung mit einer Reifendrucküberwachungseinheit nach einem der Ansprüche 4 bis 7 und einer Zentraleinheit, die einen Empfänger zum Empfangen von drahtlose übermittelten Druckinformationen aufweist, **dadurch gekennzeichnet, dass** die Zentraleinheit ein Warnsignal, vorzugsweise ein akustisches Warnsignal erzeugt, wenn der Reifendruck einen vorgegebenen Schwellenwert übersteigt.

## Claims

1. A method for operating a tyre pressure monitoring unit for monitoring pneumatic tyres of a vehicle, wherein
a pressure measurement is taken at regular intervals using a pressure sensor of the tyre pressure monitoring unit and pressure information is transmitted wirelessly at larger intervals by a transmitter of the tyre pressure monitoring unit,
a control unit of the tyre pressure monitoring unit checks whether a pressure change exceed a threshold value has occurred, and, if so, pressure measurements are taken at shortened intervals and the transmission activity is increased,
the control unit uses a first threshold value for the pressure change in the case of a stationary vehicle and uses a second threshold value, which differs from the first threshold value, for the pressure change in the case of a moving vehicle, and
wherein the control unit, by evaluating a signal of an acceleration sensor of the tyre pressure monitoring unit, establishes whether the first threshold value or the second threshold value is used,
**characterized in that** the shortened intervals between pressure measurements are larger when an overshooting of the first threshold value has triggered the reduction than when an overshooting of the second threshold value has triggered the reduction .

2. The method according to Claim 1, **characterised in that** the first threshold value is smaller than the second threshold value, preferably at least by a third.

3. The method according to any one of the preceding claims, **characterised in that**, in the case of a stationary vehicle, the control unit also checks whether the tyre pressure has fallen below a third threshold value, and, if so, pressure measurements are taken at shortened intervals and the transmission activity is increased.

4. A tyre pressure monitoring unit, comprising
an acceleration sensor,
a pressure sensor,
a transmitter for wirelessly transmitting pressure information, and
a control unit for controlling the measurement and transmission activity, wherein the tyre pressure monitoring unit
in a driving mode (1) takes pressure measurements at first intervals and transmits pressure information at second intervals,
in a parking mode (2) takes pressure measurements at third intervals, which are longer than the first intervals, and
wherein the control unit evaluates signals of the acceleration sensor and switches between the driving mode (1) and the parking mode (2) in accordance with a result of the evaluation, and
wherein the control unit switches to a warning mode (1a; 2a) when a pressure change which exceeds a stored threshold value is determined, and then takes pressure measurements at intervals which are shorter than the first intervals and transmits pressure information at intervals which are shorter than the second intervals, and
wherein the control unit switches from the parking mode (2) to a parking warning mode (2a) when a pressure change which exceeding a first stored threshold value is determined, and switches from the driving mode (1) to a driving warning mode (1a) when a pressure change exceeding a second stored threshold value, which deviates from the first threshold value, is determined, wherein the control unit leaves the parking warning mode (2a) at the latest after a predetermined number of pressure measurements, and
wherein the control unit leaves the driving warning mode (1a) after a predetermined number of pressure measurements,
**characterized in that** the predetermined number of pressure measurements for leaving the driving warning mode is greater than the predetermined number of pressure measurements for leaving the parking warning mode.

5. The tyre pressure monitoring unit according to Claim 5, **characterised in that**, in the parking warning mode (2a), pressure measurements are taken at fifth intervals, and, in the driving warning mode (1a), pressure measurements are taken at sixth intervals, which are shorter than the fifth intervals.

6. The tyre pressure monitoring unit according to Claim 4 or 5, **characterised in that** the control unit also switches from the parking mode (2) to the parking warning mode (2a) when the tyre pressure has fallen below a third threshold value.

7. The tyre pressure monitoring unit according to Claim 6, **characterised in that** it is stored in a memory whether a switch to the parking warning mode (2a) has already occurred due to an undershooting of the third threshold value, and **in that** the memory is reset each time the control unit identifies a new journey by evaluation of signals of an acceleration sensor, and **in that** there is no switch to the parking warning mode (2a) when, in the memory, a value is stored which indicates that a switch to the parking warning mode (2a) due to undershooting of the third threshold value has already occurred since the last journey.

8. A system for tyre pressure monitoring, comprising a tyre pressure monitoring unit according to any one of Claims 4 to 7 and a central unit which comprises a receiver for receiving wirelessly transmitted pressure information, **characterised in that** the central unit generates a warning signal, preferably an acoustic warning signal, when the tyre pressure exceeds a predetermined threshold value.

## Revendications

1. Méthode pour faire fonctionner une unité de contrôle de la pression des pneus pour contrôler des pneumatiques d'un véhicule,
une mesure de pression étant pratiquée à des intervalles de temps réguliers avec un capteur de pression de l'unité de contrôle de la pression des pneus et une information de pression étant émise sans fil à de plus grands intervalles de temps par un émetteur de l'unité de contrôle de la pression des pneus,
une unité de commande de l'unité de contrôle de la pression des pneus vérifiant, si une variation de pression s'est produite, qui dépasse une valeur seuil et, si cela est le cas, des mesures de pression étant pratiquées à des intervalles de temps raccourcis et l'activité d'émission étant augmentée, l'unité de commande utilisant une première valeur seuil pour la variation de pression avec le véhicule arrêté et une deuxième valeur seuil s'écartant de la première valeur seuil pour la variation de pression avec le véhicule en marche, et
l'unité de commande déterminant par évaluation d' un signal d'un capteur d'accélération de l'unité de contrôle de la pression des pneus si la première valeur seuil ou la deuxième valeur seuil est utilisée,
**caractérisée en ce que** les intervalles de temps raccourcis entre les mesures de pression sont plus grands, si un dépassement de la première valeur seuil a déclenché le raccourcissement, que lorsqu' un dépassement de la deuxième valeur seuil a déclenché le raccourcissement.

2. Méthode selon la revendication 1, **caractérisée en ce que** la première valeur seuil est plus faible que la deuxième valeur seuil, de préférence plus faible d'au moins un tiers.

3. Méthode selon l'une quelconque des revendications précédentes, **caractérisée en ce que** l'unité de commande vérifie également avec le véhicule arrêté, si la pression des pneus est tombée en dessous d'une troisième valeur seuil et si cela est le cas, des mesures de pression sont pratiquées à des intervalles de temps raccourcis et l'activité d'émission est augmentée.

4. Unité de contrôle de la pression des pneus avec
un capteur d'accélération,
un capteur de pression,
un émetteur pour la transmission sans fil d'informations de pression, et une unité de commande pour piloter l'activité de mesure et d'émission, l'unité de contrôle de la pression des pneus procédant dans un mode de conduite (1) à des mesures de pression dans des premiers intervalles de temps et émettant des informations de pression dans des deuxièmes intervalles de temps,
procédant un mode de stationnement (2) à des mesures de pression dans des troisièmes intervalles de temps, qui sont plus longs que les premiers intervalles de temps, et
l'unité de commande exploitant des signaux du capteur d'accélération et alternant en fonction d'un résultat de l'exploitation entre le mode de conduite (1) et le mode de stationnement (2),
l'unité de commande passant dans un mode d'avertissement (1a ; 2a), si une variation de pression est constatée, qui dépasse une valeur seuil mémorisée et pratiquant ensuite des mesures de pression dans des intervalles de temps, qui sont plus courts que les premiers intervalles de temps et émettant des informations de pression dans des intervalles de temps, qui sont plus courts que les deuxièmes intervalles de temps, et
l'unité de commande passant du mode stationnement (2) dans un mode d'avertissement de stationnement (2a), si une variation de pression est constatée, qui dépasse une première valeur seuil mémorisée et passant du mode de conduite (1) dans un mode d'avertissement en marche (1a), si une variation de pression est constatée, qui dépasse une deuxième valeur seuil mémorisée qui s'écarte de la première valeur seuil,
l'unité de commande quittant à nouveau le mode d'avertissement de stationnement (2a) au plus tard après un nombre prédéfini de mesures de pression,
et l'unité de commande quittant à nouveau le mode d'avertissement en circulation (1a) après un nombre prédéfini de mesures de pression, **caractérisée en ce que** le nombre prédéfini de mesures de pression prédéfini pour quitter le mode d'avertissement en marche est plus grand que le nombre de mesures de pression prédéfini pour quitter le mode d'avertissement de stationnement.

5. Unité de contrôle de la pression des pneus selon la revendication 4, **caractérisée en ce que** des mesures de pression sont pratiquées en mode d'avertissement de stationnement (2a) dans les cinquièmes intervalles de temps et des mesures de pression sont pratiquées dans le mode d'avertissement en marche (1a) dans les sixièmes intervalles de temps, qui sont plus courts que les cinquièmes intervalles de temps.

6. Unité de contrôle de la pression des pneus selon la revendication 4 ou 5, **caractérisée en ce que** l'unité de commande passe également ensuite du mode de stationnement (2) en mode d'avertissement de stationnement (2a), si la pression des pneus est tombée en dessous d'une troisième valeur seuil.

7. Unité de contrôle de la pression des pneus selon la revendication 6, **caractérisée en ce qu'**il est consigné dans une mémoire, si un passage dans le mode d'avertissement de stationnement (2a) a déjà eu lieu une fois en raison du dépassement de la troisième valeur seuil et la mémoire est à chaque fois réinitialisée, si l'unité de commande identifie un début de conduite en exploitant des signaux d'un capteur d'accélération et un passage n'a pas lieu dans le mode d'avertissement de stationnement (2a), si une valeur est mémorisée dans la mémoire qui affiche qu'en raison du dépassement de la troisième valeur seuil un passage dans le mode d'avertissement de stationnement (2a) a déjà eu lieu une fois depuis le dernier trajet.

8. Système pour le contrôle de la pression des pneus avec une unité de contrôle de la pression des pneus selon l'une quelconque des revendications 4 à 7 et une unité centrale, qui comporte un récepteur pour recevoir des informations de pression transmises sans fil, **caractérisé en ce que** l'unité centrale génère un signal d'avertissement, de préférence un signal d'avertissement acoustique, si la pression des pneus dépasse une valeur seuil prédéfinie.
